(19) **Europäisches Patentamt**
**European Patent Office**
**Office européen des brevets**

(11) **EP 2 380 924 B1**

(12) **EUROPEAN PATENT SPECIFICATION**

(45) Date of publication and mention
of the grant of the patent:
**13.08.2014 Bulletin 2014/33**

(51) Int Cl.:
***C08J 9/40*** *(2006.01)*

(21) Application number: **09834887.3**

(22) Date of filing: **22.12.2009**

(86) International application number:
**PCT/JP2009/071336**

(87) International publication number:
**WO 2010/074086 (01.07.2010 Gazette 2010/26)**

(54) **COMPOSITE SHEET AND MANUFACTURING METHOD THEREFOR**

VERBUNDFOLIE UND VERFAHREN ZU IHRER HERSTELLUNG

FEUILLE COMPOSITE ET SON PROCÉDÉ DE FABRICATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.12.2008 JP 2008328514**

(43) Date of publication of application:
**26.10.2011 Bulletin 2011/43**

(73) Proprietor: **W. L. Gore & Associates, Co., Ltd.
Tokyo
108-0075 (JP)**

(72) Inventors:
• **HISANO, Hirokazu
Tokyo 156-8505 (JP)**

• **MANABE, Hiroshi
Tokyo 156-8505 (JP)**
• **ZENITANI, Norimasa
Tokyo 156-8505 (JP)**
• **YAMAGUCHI, Tomoka
Tokyo 156-8505 (JP)**

(74) Representative: **Shanks, Andrew et al
Marks & Clerk LLP
Aurora
120 Bothwell Street
Glasgow G2 7JS (GB)**

(56) References cited:
**EP-A1- 0 581 510     FR-A1- 2 362 316
GB-A- 2 047 298      JP-A- 2001 329 105
JP-A- 2003 261 705    JP-A- 2006 096 991**

**EP 2 380 924 B1**

**Description**

TECHNICAL FIELD

The present invention relates to a composite sheet, a production method thereof and a sheet gasket containing the composite sheet.

BACKGROUND ART

As the gasket in the flange of a pipe or device, a sheet gasket is widely used. A sheet gasket is produced by cutting an expanded graphite sheet, a gum sheet, a joint sheet and others, and is easily formed into the shape in accordance with that of a flange. In addition, sealing becomes possible at a low clamping pressure using a sheet gasket, relative to the case of using a metal gasket and a semi-metal gasket.

As the material of a sheet gasket, an appropriate one can be used depending on the use of application. For example, the sheet gasket consisting of fluorine resin such as PTFE is used, when a corrosive fluid is treated.

However, the sheet gasket consisting of only PTFE is disadvantageous in that the use at a temperature of not less than 100°C is difficult, since the stress relaxation (creep) is large, although the sheet gasket is excellent in chemical resistance.

The composite sheet consisting of various fillers and PTFE has been therefore developed for improving the problem of PTFE sheet used as a gasket (Patent Documents 1 to 9).

The above-mentioned composite sheets are generally produced by mixing PTFE powder with filler powder, further adding forming aid, extruding the mixture for shape forming, and then expanding the formed body. PTFE has a weakness of stress relaxation, and such a weakness is decreased by adding filler in the sheets. However, in the case where the amount of filler is increased, the compressibility which is necessary for a gasket becomes unsatisfactory, since the sheet becomes hard; as a result, flexibility is decreased and leakage on the interface occurs. In addition, when the amount of filler is increased, the amount of PTFE is relatively decreased. In the sheet for a gasket, PTFE play a role as filler for filling the interspaces between fillers and as binder for binding fillers. Therefore, when the amount of PTFE is decreased, airtightness and tensile strength are lowered. As a result, penetration leakage occurs and pressure resistance is decreased.

In the technology described Patent Document 10, a sheet is produced by swelling PTFE with forming aid such as a petroleum hydrocarbon solvent, and gradually-volatizing the forming aid during the expanding step. In the expanding step, the sheet becomes densified. The airtightness of the thus obtained sheet is good, even when the amount of filler is high. However, the flexibility and tensile strength of the sheet described in Patent Document 10 are not sufficiently improved.

The composite sheet in which hollow micro glass balloons are mixed is commercially available for improving low flexibility which is disadvantage of the above-described PTFE sheet with filler. The composite sheet has good compressibility and is excellent in flexibility, since the micro glass balloons easily crush when the sheet is compressed. However, the stress relaxation cannot be sufficiently improved, since a large amount of micro glass balloons cannot be mixed in the sheet. Even if a large amount of micro glass balloons is mixed, the problem of low pressure resistance due to relatively-decreased PTFE amount cannot be still resolved.

Other than the above-described technologies, in Patent Document 11, is disclosed a composite sheet produced by primarily-forming the composite consisting of forming agent in addition to PTFE and filler into a sheet, and then expanding the sheet, and further forming the expanded sheet. However, when such a sheet is used as a gasket, penetration leakage occurs, since there are many small continuous voids in the sheet.

In Patent Document 12, the composite sheet in which pores of an expanded porous PTFE sheet are filled with silica gel is disclosed. However, the compressibility of the sheet is very low, since the pores of an expanded PTFE sheet are completely filled with silica gel for improving handling property without losing transparency due to silica gel and maintaining the transparency. In addition, the sheet cannot be used as a gasket, since the sheet is very thin.

PATENT DOCUMENT

Patent Document 1: JP 1-225652 A
Patent Document 2: JP 4-214787 A
Patent Document 3: JP 5-78645 A
Patent Document 4: JP 2004-323717 A
Patent Document 5: JP 2007-253519 A

Patent Document 6: JP 2007-296756 A
Patent Document 7: JP 2008-7607 A
Patent Document 8: JP 2008-13654 A
Patent Document 9: JP 2008-13715 A
Patent Document 10: JP 2001-278997 A
Patent Document 11: JP 2007-196184 A
Patent Document 12: JP 2001-329105 A

DISCLOSURE OF THE INVENTION

PROBLEMS TO BE SOLVED BY THE INVENTION

As described above, composite sheets produced by expanding an extrusion-molded material consisting of PTFE powder and filling material powder have been known.

However, when the content ratio of filler is increased for decreasing stress relaxation ratio, the sheet becomes fragile and difficult to be processed. Even if the sheet having high filler ratio can be obtained, the compressibility, which is important property for a gasket material, is not sufficient. As a result, the flexibility is lowered, and fluid is easily leaked along the interface between a gasket and a flange. Such a phenomenon is referred as the leakage on the interface. In addition, when the content ratio of filler is increased, airtightness and tensile strength are lowered, since the amount of PTFE is relatively decreased.

Under the above-mentioned circumstance, it is an objective of the present invention to provide a composite sheet and a production method thereof, which composite sheet has excellent sealing ability, since the sheet exhibits high compressibility and yet low stress relaxation, as well as high strength and excellent pressure resistance. The objective of the present invention is also to provide a sheet gasket having the above-mentioned properties.

MEANS FOR SOLVING THE PROBLEMS

The present inventors made intensive studies to solve the above problems. As a result, the present inventors found that the stress relaxation of a sheet can be improved, while the strength is maintained, by controlling the ratio of remaining pores when the pores of a relatively-thick expanded porous PTFE sheet having high porosity are filled with silica gel; and completed the present invention.

The composite sheet according to present invention is **characterized in that** pores of an expanded porous PTFE sheet are filled with silica gel; and a ratio of remaining pores is not less than 5% and less than 50%.

It is preferable that a ratio of the silica gel in the composite sheet is adjusted to not less than 20% by mass. The stress relaxation of the sheet can be improved with more absolute certainty by filling the pores with sufficient amount of silica gel. In addition, the flexibility and strength of the sheet are not excessively decreased, and the flexibility and pressure resistance are adequately maintained, even when the ratio of silica gel is increased, since an expanded porous PTFE sheet is more flexible and stronger than a non-expanded PTFE sheet or non-porous PTFE sheet. Furthermore, the strength is sufficiently maintained even when the sheet is pressed, since the silica gel crushed by pressure stays in pores.

It is preferable that the remaining pores are independent pores in the composite sheet. If one remaining pore connects to the neighboring pores, leakage may possibly occur when such a sheet is used as a gasket, since the two sides of the sheet may be connected depending on the connection degree of the pores. On the other hand, when all of the remaining pores are independent pores, the composite sheet exhibits appropriate compressibility and can be used as an excellent gasket.

The method for producing the composite sheet according to the present invention is characterized by comprising the steps of impregnating an expanded porous PTFE sheet with a silica sol, wherein the expanded porous PTFE sheet has a porosity of not less than 60%; and then sintering the impregnated expanded porous PTFE sheet.

In the production method, the expanded porous PTFE sheets impregnated with silica gel may be laminated, and then sintered. By the embodiment, a relatively-thin sheet can be easily produced.

The sheet gasket according to the present invention is characterized by comprising the composite sheet.

THE EFFECT OF THE INVENTION

The composite sheet of the present invention exhibits adequate compressibility, since the composite sheet has appropriate remaining pores. In addition, the composite sheet has high tensile strength and excellent stress relaxation property, since the composite sheet is produced by using an expanded porous PTFE sheet and silica gel as materials. Therefore, the composite sheet is resistant to high internal pressure and leakage hardly occurs on the interface, when the composite sheet is used as a material of gasket. In addition, the compressibility and others can be easily controlled, depending on the use condition of the gasket. Furthermore, such an excellent composite sheet can be produced with the method of the present invention.

BRIEF DESCRIPTION OF THE DRAWINGS

Figure 1 is a view showing a frame format of the case in which an expanded porous PTFE sheet as a material is impregnated with silica sol. In the Figure 1, "1" represents nodes, "2" represents fibrils and "3" represents silica sol.
Figure 2 is a view showing a frame format of the case in which the part of an expanded porous PTFE sheet as a material is impregnated with silica sol.
Figure 3 is a view showing a frame format of the composite sheet according to the present invention. In the Figure 3, "4" represent silica gel and "5" represent remaining pores.

MODE FOR CARRYING OUT THE INVENTION

The composite sheet according to present invention is **characterized in that** pores of an expanded porous PTFE sheet are filled with silica gel; and a ratio of remaining pores is not less than 5% and not more than 50%.

The main backbone of the sheet according to the present invention is an expanded porous PTFE sheet. An expanded porous PTFE sheet to be a raw material is obtained by mixing a polytetrafluoroethylene fine powder with a forming aid in order to obtain a paste, obtaining a molded body from the paste, expanding the molded body after removing or without removing the forming aid from the molded body, and optionally sintering the expanded body. In the case of uniaxial expanding, the sheet has a fibrous structure in which fibrils orient to the expanding direction and there are pores between the fibrils. In the case of biaxial expanding, the sheet has an arachnoid fibrous structure in which fibrils radially extend and there are many pores surrounded by nodes and the fibrils.

An expanded porous PTFE sheet is stronger than a non-expanded PTFE sheet, since molecules of polytetrafluoroethylene are oriented in the expanding direction. An expanded PTFE can be distinguished from a non-expanded PTFE by the peak in differential thermal analysis curve obtained by differential scanning calorimetry (DSC). Specifically, there is a peak between 325 and 340[deg.]C in the differential thermal analysis curve of a sintered body consisting of non-expanded PTFE, while there is a peak between 360 and 380[deg.]C in the differential thermal analysis curve of a sintered body consisting of expanded PTFE except for a peak between 325 and 340[deg.]C.

The porosity of the porous PTFE sheet to be raw material is preferably not less than 60%, more preferably not less than 70%. In addition, the porosity is preferably not more than 90%, more preferably not more than 80%, since the strength of the sheet may possibly not be enough when the porosity is too high, that is, the ratio of PTFE in the sheet structure is too low. The porosity of an expanded porous PTFE can be calculated with the following equation, using the apparent density $\rho$ (g/cm$^3$).

$$\text{Porosity (\%)} = [(2.2 - \rho) / 2.2] \times 100$$

The thickness of the expanded porous PTFE sheet to be a raw material is not particularly limited, and preferably is not less than 0.1 $\mu$m and not more than 10 mm. When the thickness is less than 0.1 $\mu$m, the remaining pores ratio may not be ensured and the pressing amount may become insufficient when the composite sheet is used as a gasket material, since silica gel is hardened in a uniform way. On the other hand, when the thickness is more than 10 mm, it may possibly become difficult to sufficiently-fill inside of the PTFE sheet with silica gel. The thickness of PTFE sheet is more preferably not less than 0.5 mm, and further preferably not less than 1 mm and not more than 3 mm. In the present invention, a sheet is not particularly distinguished from a film, and the term "sheet" is mainly used.

The pore size of the expanded porous PTFE sheet to be a raw material is preferably not less than 0.01 $\mu$m and not more than 100 $\mu$m. When there are pores having a size of more than 100 $\mu$m, crack may develop or silica gel fractured by compression may not be maintained on the composite sheet of the present invention filled with silica gel when the sheet is bended. On the other hand, it may be possibly difficult to fill pores having a diameter of less than 0.01 $\mu$m. The pore size is more preferably not less than 0.1 $\mu$m and not more than 10 $\mu$m.

The pore size according to the present invention means average pore diameter, and can be measured by mean flow point method using a porometer.

The expanded porous PTFE sheet to be a raw material may have single layer or may be produced by laminating and combining plural sheets. Commercially available sheet may be used as the porous PTFE sheet to be a raw material.

The composite sheet of the present invention is produced by filling the pores of an expanded porous PTFE sheet with silica gel. Silica gel means a gel having a three dimensional structure formed by siloxane bond, i.e. =Si-O-. The silica gel may be subjected to surface modification. For example, the hydroxy group on the surface may be substituted with an alkoxy group.

In the sheet of the present invention, silica gel particles are not adhered on the fibrils and nodes of an expanded porous PTFE sheet, but the pores are filled with silica gel. In the case where silica gel particles are just adhered on the fibrils and nodes, stress relaxation cannot be sufficiently decreased when the sheet of the present invention is used as a gasket material.

The content ratio of silica gel relative to the whole sheet of the present invention is preferably not less than 20% by mass. When the content ratio is not less than 20% by mass, the large stress relaxation of PTFE sheet can be overcome. The content ratio is more preferably 30% by mass. On the other hand, when the content ratio is too large, the properties which are necessary for a gasket may be possibly degraded since the sheet wholly may become friable and the flexibility thereof may be decreased. The content ratio is therefore preferably not more than 80% by mass, and more preferably not more than 70% by mass.

As described later, the sheet of the present invention is produced by impregnating an expanded porous PTFE sheet into silica sol and then sintering the impregnated sheet; but the sheet of the present invention has remaining pores. In the production method, there are not pores just after the pores of an expanded porous PTFE sheet is filled with silica sol. Next, the volume of silica sol is decreased during the hardening process from silica sol to silica gel. On this occasion, the decreasing degree of the whole volume of the sheet is smaller than the decreasing degree of the silica gel volume inside the sheet, since the surface part of the sheet is firstly hardened when the sheet is relatively thick. As a result, remaining pores will develop in the silica gel. Though the sheet has a porous structure and high flexibility, penetrating leakage does not take place when the sheet is used, since the remaining pores are independent from each other.

It has been found that there is correlation between the remaining pore ratio and compressibility of the sheet of the present invention, and it is possible to ensure the compressibility which is necessary for a gasket material by controlling the remaining pore ratio to appropriate range. The remaining pore ratio of the sheet of the present invention is preferably not less than 5% and not more than 50%. When the remaining pore ratio is less than 5%, the compressibility is decreased and the flexibility for sealing surface cannot be sufficiently ensured. As a result, the leakage at the interface will take place. If the remaining ratio is more than 50%, clamping may be difficult when the sheet is used as a gasket since the compressibility may be too high. The remaining pore ratio is more preferably not less than 10% and not more than 40% The remaining pore ratio can be controlled by the thickness of an expanded porous PTFE sheet, the kind of silica sol and catalyst, the hardening condition and others

The remaining pore ratio of the sheet of the present invention can be calculated with the following equation.

$$\text{Remaining pore ratio } (\%) = [1 - M_p / (2.2 \times V_{ps}) - (M_{ps} - M_p) / (V_{ps} \times P_s] \times 100$$

wherein, $M_p$ (g) represents the mass of the expanded porous PTFE, $V_{ps}$ (cm$^3$) represents the volume of the composite sheet, $M_{ps}$ (g) represents the mass of the composite sheet, 2.2 (g/cm$^3$) represents the real density of the expanded porous PTFE, $P_s$ (g/cm$^3$) represents the real density of the silica gel after hardening.

The real density of the silica gel after hardening, $P_s$, can be determined by hardening only silica sol to obtain silica gel and then measuring the density of the silica gel with specific gravity bottle method.

The composite sheet of the present invention can be produced by impregnating an expanded porous PTFE sheet to be a raw material with a silica sol and then hardening the silica sol while the solvent is removed with heating. Alternatively, plural expanded porous PTFE sheets to be raw materials impregnated with silica sol may be laminated, and then the laminated sheets are hardened with heating. In such a case, silica gel plays a role as an adhesive agent for combining the expanded porous PTFE sheets to be raw materials.

As the raw material of silica sol, silicon alkoxide compound such as methyltrimethoxysilane, methyltriethoxysilane, ethyltrimethoxysilane, ethyltriethoxysilane, propyltrimethoxysilane, propyltriethoxysilane, isobutyltrimethoxysilane, isobutyltriethoxysilane, diisobutyldimethoxysilane, dimethoxymethylsilane, phenyltriethoxysilane, methacryloxypropyltrimethoxysilane, aminopropyltriethoxysilane, aminoethylaminopropyltriethoxysilane, tetramethoxysilane, tetraethoxysilane, tetraisopropoxysilane, tetrabutoxysilane, and soluble oligomers thereof, such as ethyl polysilicate, may be used. As the silicon alkoxide compound and soluble oligomer, those of whose functionality is improved by chemical modification or physical modification may be used. The organic group for modification may be exemplified by $C_{1-20}$ alkyl groups and substituted $C_{1-20}$ alkyl groups; $C_{6-20}$ aryl groups and substituted $C_{6-20}$ aryl groups ; $C_{7-20}$ aralkyl groups and substituted $C_{7-20}$ aralkyl groups; organic groups having polarity, such as -C-O-, -C=O, -COO-, -COOH, -CON=, -CN, -NH$_2$, -NH- and an epoxy group; and organic groups having an unsaturated carbon bond, such as >C=CH-.

5

The silica sol used in the present invention may consist of one silica sol material or plural silica sol materials.

Slica sol material may contain a metal alkoxide other than silica alkoxide. Such a metal alkoxide is represented as a general formula: $M(OR)_n$ or $MO(OR)_{n-2}$, wherein M represents a metal atom, R represents an alkyl group, and n represents oxidation number of the metal element. The "M" is not particularly limited, and is exemplified by Li, Na, Cu, Ca, Sr, Ba, Zn, B, Al, Ga, Y, Ge, Pb, P, Sb, V, Ta, W, Ti, Zr, Fe, Mg, Sn, Ni, La, Gd, Eu, Tb and Dy.

The solvent contained in the silica sol according to the present invention is not particularly limited; in general, the alcohol corresponding to the alkoxy group constituting the silica sol is used. For example, when tetraethoxysilane is used as silica sol material, ethanol can be used as the solvent. In addition, a mixed solvent of alcohol and water can be used.

To the silica sol used in the present invention, an acid or base may be added as a catalyst for the polymerization reaction of the silica sol. As such an acid, hydrochloric acid, sulfuric acid, nitric acid, acetic acid and hydrofluoric acid are exemplified; and as such a base, sodium hydroxide, potassium hydroxide and ammonia are exemplified.

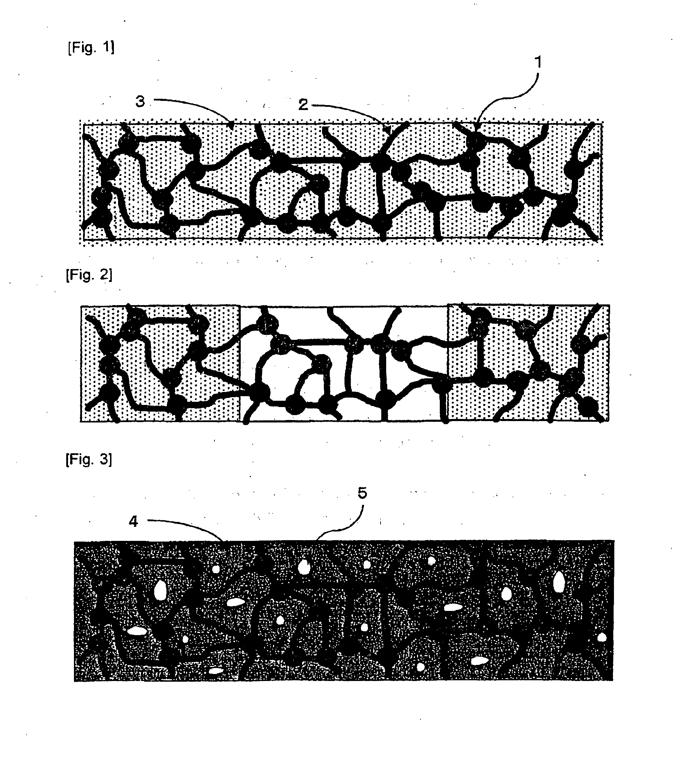

When an expanded porous PTFE sheet to be a raw material is impregnated with silica sol, the pores of the expanded porous PTFE sheet to be a raw material are completely filled with the silica sol as shown in Figure 1. In addition, it is not necessarily the case that an expanded porous PTFE sheet to be a raw material is wholly impregnated with the silica sol; and only the part of the sheet may be impregnated as shown in Figure 2.

The method for filling an expanded porous PTFE sheet to be raw material with the silica sol is not particularly limited, and common procedures can be used. The method may be any one of, for example, vacuum pressure impregnation, vacuum impregnation, spraying, evaporation to dryness, a metaling bar method, a die coating method, a gravure method, a reverse roll method and a doctor blade method. Even if the silica sol is just applied to the expanded porous PTFE sheet to be a raw material, the pores are filled with the silica sol. In other words, the term, "filling", in the present invention is a concept that the pores of the expanded porous PTFE sheet to be a raw material may be simply filled with the silica sol, and includes applying as a means for that purpose.

When an expanded porous PTFE sheet to be a raw material is thin, the pores of the expanded porous PTFE sheet to be a raw material may be filled with the silica sol only by the impregnation of one time. On the other hand, when an expanded porous PTFE sheet to be a raw material is thick, the pores may not be able to be completely filled with the silica sol only by the impregnation of one time in some cases. In such a case, the sheet is impregnated with the silica sol a plurality of times so that the pores are completely filled.

Next, the expanded porous PTFE sheet impregnated with the silica sol is heated to harden the silica sol while the solvent is removed. Specifically, the silicon alkoxide compound in the solution is hydrolyzed and polymerized; in other words, a sol-gel reaction is carried out.

Preferably, first, the solvent is removed by heating at relatively low temperature. If heating is carried out at high temperature from the start, the silica sol itself may possibly evaporate, and the surface may be rapidly hardened and cracks may be possibly generated after hardening due to residual strain. The starting temperature for heating is dependent on the boiling point of the solvent, and is preferably not less than about 50°C and not more than about 120°C. The time for heating is appropriately adjusted; in general, the time is preferably not less than about 10 minutes and not more than about 5 hours.

Next, the solvent is completely removed and polymerization reaction is accelerated by heating at relatively high temperature. The temperature at the time is preferably not less than about 150°C and not more than about 300°C. The time for heating is appropriately adjusted; in general, the time is preferably not less than about 10 minutes and not more than about 5 hours.

As the result of the heating, the solvent is removed from the silica sol in the pores of an expanded porous PTFE sheet and the silica sol is hardened to be silica gel. At the time, it can be thought that the remaining pores generate in the silica gel inside of the sheet, since the surface part of the sheet is firstly hardened and the volume of the silica sol is decreased.

The composite sheet of the present invention can be used as the material of a gasket. Such a gasket is excellent in chemical resistance property and heat resistance property, since the gasket consists of PTFE and silica gel. In addition, the stress relaxation is decreased, since the gasket is filled with silica gel. Furthermore, the leakage of fluid at the interface is prevented, since there are also pores in the silica gel part and the compressibility is high though the content ratio of silica gel is high. As mentioned above, the gasket according to the present invention is excellent.

The gasket according to the present invention can be produced by cutting the composite sheet of the present invention into a desired shape. For example, the composite sheet may be cut into a shape such as a ring in accordance with the shape of the flange part of a pipe or device. Alternatively, an expanded porous PTFE sheet to be a raw material is firstly cut into a desired shape, and the pores of the cut sheet are filled with silica gel by the above-described method, in order to produce a gasket. With the latter method, the use amount of silica sol can be reduced.

EXAMPLES

Hereinafter, the present invention is described in detail with reference to examples; however, it is not intended that the present invention be limited to the demonstrated examples.

Example 1

Tetraethyl orthosilicate (hereinafter, referred to as "TEOS), ethyl polysilicate (manufactured by Colcoat Co., Ltd.; product name: "ethyl silicate 48") and silica-type coat preparation (manufactured Nikko Inc.; product name: "Heatless Glass GS-600-1") were mixed in the proportion of 2 : 2 : 1 by mass of solid content, to obtain impregnation solution A. An expanded porous PTFE sheet having the size of 10 cm x 10 cm (manufactured by Japan Gore-Tex Inc.; porosity: 70%; thickness: 3 mm; product name: "Hyper Sheet") was impregnated with the impregnation solution A (100 mL) in vacuo. The impregnated expanded porous PTFE sheet was dried at 70°C for 2 hours, and then the temperature was gradually raised to 250°C and the sheet was maintained at the temperature for 2 hours for hardening, to obtain a composite sheet.

Example 2

TEOS and silica-type coat preparation (manufactured Nikko Inc. ; product name: "Heatless Glass GS-600-1") were mixed in the proportion of 2 : 1 by mass of solid content, to obtain impregnation solution B. A composite sheet was produced by the same method of the above Example 1 except that the impregnation solution B was used.

Example 3

TEOS and silica-type coat preparation (manufactured Nikko Inc.; product name: "Telios Coat NP-360TSK") were mixed in the proportion of 2 : 1 by mass of solid content, to obtain impregnation solution C. A composite sheet was produced by the same method of the above Example 1 except that the impregnation solution C was used.

Example 4

TEOS (62.5 g), ethyl polysilicate (manufactured by Colcoat Co., Ltd. ; product name: "ethyl silicate 48" ; 27 g), triethyl phosphate (5.6 g), water (16.3 g) and ethanol (23.5 g) were mixed, and a small amount of hydrochloric acid was added thereto, to obtain impregnation solution D. A composite sheet was produced by the same method of the above Example 1 except that the impregnation solution D was used.

Example 5

An expanded porous PTFE sheet having the size of width 10 cm x length 7 m (porosity: 80%; thickness: 20 [micro]m) was impregnated with the impregnation solution D. The impregnated sheet was folded back 70 times into the size of 10 cm x 10 cm, to obtain a laminated sheet. The laminated sheet was fixed on a frame with pins and dried at 70°C for 2 hours, and then the temperature was gradually raised to 250°C and the sheet was maintained at 250°C for 2 hours for hardening, to obtain a composite sheet.

Comparative Example 1

A PTFE sheet blended with filler, produced by expanding and forming the mixture of PTFE powder and inorganic filler, (manufactured by Nippon Valqua Industries, Ltd.; product name: "#7020"; nominal thickness: 3 mm) was used.

Comparative Example 2

A PTFE sheet blended with filler, produced by mixing PTFE powder with micro glass balloon, (manufactured by Garlock Inc.; product name: "#3504"; nominal thickness: 3 mm) was used.

Comparative Example 3

An expanded porous PTFE sheet having the size of 10 cm x 10 cm (manufactured by Japan Gore-Tex Inc.; porosity: 70%; thickness: 3 mm; product name: "Hyper Sheet") was impregnated with the impregnation solution D in vacuo. The impregnated expanded porous PTFE sheet was dried at 50°C for 30 minutes, and then impregnated with the impregnation solution D in vacuo again. This procedure was repeated three times. The impregnated expanded porous PTFE sheet was dried at 70°C for 2 hours, and then the temperature was gradually raised to 120°C and the sheet was maintained at the temperature for 15 hours. Further, the temperature was raised to 250°C and the sheet was maintained at the temperature for 2 hours for hardening, to obtain a composite sheet.

Test Example

The properties of the above sheets were measured under the following conditions. The results of Examples 1 to 5 are shown in Table 1, and the results of Comparative Examples 1 to 3 are shown in Table 2.

(1) The measurement of compressibility

The compressibilities of the sheets were measured according to the condition defined in JIS R 3453 except for the thickness of the samples. Specifically, each sheet was placed on an anvil, and the penetrator having the diameter of 6.4 mm was positioned at the center thereof. First, the sheet was pressed under the pressure of 0.686 MPa for 15 seconds, and the thickness $t_1$ (mm) of the sheet was measured using a dial gauge. Next, the sheet was pressed under the pressure of 34.3 MPa for 60 seconds, and the thickness $t_2$ (mm) of the sheet was similarly measured. In addition, the sheet was pressed under the pressure of 0. 686 MPa for 60 seconds, and the thickness $t_3$ (mm) of the sheet was similarly measured. From the obtained data, the compressibility was calculated using the following formula.

$$\text{Compressibility } (\%) = [(t_1 - t_2) / t_1] \times 100$$

The measurement was carried out three times, and the average value was calculated.

(2) The measurement of recovery ratio

The recovery ratio of the sheets was measured according to the condition defined in JIS R 3453 except for the thickness of the samples. Specifically, the recovery ratio was calculated using the following formula from the obtained data in the above (1).

$$\text{Recovery ratio } (\%) = [(t_3 - t_2) / (t_1 - t_2)] \times 100$$

The measurement was carried out three times, and the average value was calculated.

(3) The measurement of sealing property

A ring having an outer diameter of 74 mm and an inner diameter of 35 mm was punched out from the each sheet. Nitrogen gas the pressure of which was 0.5 MPa was applied to the ring from the inside, while the load of plane pressure of 20 N/mm$^2$ was applied to the ring using a pressing machine. The leakage amount of nitrogen gas on the outside was measured using a soap-film flow meter. The lower measurement limit of leakage amount was set at 0.0001 Pa·m$^3$/sec.

(3) The measurement of stress relaxation ratio

The stress relaxation ratio of the sheets was measured according to the condition defined in JIS R 3453 except for the thickness of the samples. Specifically, the test pieces having a size of width 10.0 mm x length 32.0 mm were obtained from each sheet, and each test piece was sandwiched between plane circular discs of a relaxation test equipment. After the test piece was pressed at a load of 26.7 kN, the elongation $D_0$ of the bolt of the test equipment was measured. Then, the test equipment was heated 100°C for 22 hours using a circulating hot air oven. Next, the test equipment was cooled to room temperature, and the elongation $D_t$ of the bolt of the test equipment was measured. From the obtained data, the stress relaxation ratio was calculated from the following formula.

$$\text{Stress relaxation ratio } (\%) = [(D_o - D_t) / D_o] \times 100$$

The measurement was carried out three times, and the average value was calculated.

Table 1

|  | Example 1 | Example 2 | Example 3 | Example 4 | Example 5 |
|---|---|---|---|---|---|
| Thickeness (mm) | 2.25 | 2.20 | 2.15 | 2.20 | 1.10 |
| Remaining pores ratio (%) | 19 | 35 | 22 | 26 | 10 |
| Compressibility (%) | 13 | 28 | 17 | 15 | 8 |
| Recovery Ratio (%) | 56 | 39 | 52 | 48 | 46 |
| Sealing property (Pa·m$^3$/sec) | 0.0005 | 0.0007 | <0.0001 | 0.0005 | 0.0001 |
| Stress relaxation ratio (%) | 60 | 62 | 53 | 62 | 27 |
| Tensile strength (MPa) | 59 | 36 | 49 | 52 | 64 |

Table 2

|  | Comparative Example 1 | Comparative Example 2 | Comparative Example 3 |
|---|---|---|---|
| Thickeness (mm) | 3.16 | 3.03 | 2.05 |
| Remaining pores ratio (%) | - | - | 3 |
| Compressibility (%) | 5 | 34 | 3 |
| Recovery Ratio (%) | 37 | 34 | 81 |
| Sealing property (Pa·m$^3$/sec) | 0.0036 | <0.0001 | 0.0067 |
| Stress relaxation ratio (%) | 58 | 73 | 57 |
| Tensile strength (MPa) | 18 | 12 | 55 |

As the above results, the composite sheet of Comparative Example 1, which was produced by expanding and forming the mixture of PTFE powders and inorganic filler, exhibited relatively good stress relaxation ratio; and the composite sheet of Comparative Example 2, which contained micro glass balloon, exhibited large compressibility. On the other hand, the sealing property of the former composite sheet was not good, since the compressibility was small and the flexibility was not sufficient. In addition, the latter sheet was difficult to use, for example, under high temperature, since the stress relaxation ratio was large. Furthermore, the composite sheets are possibly turned apart when the sheets are used as a gasket material and are subjected to high inner pressure, since the tensile strength of the sheets is low.

The leak amount of nitrogen gas from the composite sheet of Comparative Example 3 was very high as 0.0067 Pa·m$^3$/sec, and the sealing property of the sheet was very bad. It can be thought to be the cause that the compressibility was low and the flexibility was bad since the remaining pore ratio was as low as 3%.

On the other hand, the composite sheets of the present invention had well-balanced compressibility and stress relaxation ratio as well as very high tensile strength. This is because the compressibility was large since the composite sheets had appropriate remaining pores and the stress relaxation ratio was excellent since the composite sheets included silica gel as well as the strength could be maintained even though the composite sheets contained silica gel since the material was an expanded porous PTFE sheet.

As the above results, it was found that the composite sheet according to the present invention is very useful as a gasket material, since the leakage at the interface occurs difficultly and the composite sheet is excellent in pressure resistance.

**Claims**

1.    A sheet gasket, compressible to provide a seal during use, comprising a composite sheet, **characterized in that**:

pores of an expanded porous PTFE sheet are filled with silica gel, wherein said expanded porous PTFE sheet has a thickness of not less than 0.5 mm; and
a ratio of remaining pores is not less than 5% and not more than 50%.

**2.** The sheet gasket according to claim 1, wherein a ratio of the silica gel in the composite sheet is not less than 20% by mass.

**3.** The sheet gasket according to claim 1 or 2, wherein the remaining pores in the composite sheet are independent pores.

**4.** The sheet gasket according to any one of claims 1 to 3, wherein said expanded porous PTFE sheet has a thickness of not less than 1 mm and not more than 3 mm.

**5.** The sheet gasket according to any one of claims 1 to 3, wherein said expanded porous PTFE sheet has a thickness of not more than 10 mm.

**6.** The sheet gasket according to any one of claims 1 to 5, wherein said ratio of remaining pores is not less than 10% and not more than 40%.

**7.** The sheet gasket according to any one of claims 1 to 6, wherein said ratio of the silica gel in the composite sheet is not more than 70% by mass.

**8.** A method for producing the sheet gasket according to any one of claims 1 to 7, **characterized by** comprising the steps of:

impregnating an expanded porous PTFE sheet with a silica sol, wherein the expanded porous PTFE sheet has a porosity of not less than 60%; and then
sintering the impregnated expanded porous PTFE sheet.

**9.** The production method according to claim 8, further comprising:

impregnating a plurality of expanded porous PTFE sheets with a silica sol, each of the PTFE sheets having a porosity not less than 60%; and
laminating the plurality of impregnated expanded porous PTFE sheets before the sintering step, wherein the laminated plurality of impregnated expended porous PTFE sheets are sintered together in the sintering step.

**Patentansprüche**

**1.** Plattendichtung, die komprimierbar ist, um eine Abdichtung während der Verwendung bereitzustellen, umfassend eine Verbundplatte, **dadurch gekennzeichnet, dass**:

Poren einer expandierten porösen PTFE-Platte mit Kieselgel gefüllt sind, wobei die expandierte poröse PTFE-Platte eine Dicke von nicht weniger als 0,5 mm aufweist; und
ein Verhältnis verbleibender Poren nicht weniger als 5 % und nicht mehr als 50 % beträgt.

**2.** Plattendichtung nach Anspruch 1, wobei ein Verhältnis des Kieselgels in der Verbundplatte nicht weniger als 20 Masse-% beträgt.

**3.** Plattendichtung nach Anspruch 1 oder 2, wobei die verbleibenden Poren in der Verbundplatte unabhängige Poren sind.

**4.** Plattendichtung nach einem der Ansprüche 1 bis 3, wobei die expandierte poröse PTFE-Platte eine Dicke von nicht weniger als 1 mm und nicht mehr als 3 mm aufweist.

**5.** Plattendichtung nach einem der Ansprüche 1 bis 3, wobei die expandierte poröse PTFE-Platte eine Dicke von nicht mehr als 10 mm aufweist.

**6.** Plattendichtung nach einem der Ansprüche 1 bis 5, wobei das Verhältnis verbleibender Poren nicht weniger als 10 % und nicht mehr als 40 % beträgt.

**7.** Plattendichtung nach einem der Ansprüche 1 bis 6, wobei das Verhältnis des Kieselgels in der Verbundplatte nicht mehr als 70 Masse-% beträgt.

**8.** Verfahren zur Herstellung der Plattendichtung nach einem der Ansprüche 1 bis 7, **dadurch gekennzeichnet, dass** es die Schritte umfasst des:

Imprägnierens einer expandierten porösen PTFE-Platte mit einem Kieselsol, wobei die expandierte poröse PTFE-Platte eine Porosität von nicht weniger als 60 % aufweist; und dann
Sinterns der imprägnierten, expandierten porösen PTFE-Platte.

**9.** Herstellungsverfahren nach Anspruch 8, des Weiteren Folgendes umfassend:

das Imprägnieren einer Mehrzahl expandierter poröser PTFE-Platten mit einem Kieselsol, wobei jede der PTFE-Platten eine Porosität von nicht weniger als 60 % aufweist; und
das Laminieren der Mehrzahl imprägnierter, expandierter poröser PTFE-Platten vor dem Sinterschritt, wobei die laminierte Mehrzahl imprägnierter, expandierter poröser PTFE-Platten im Sinterschritt zusammengesintert wird.

## Revendications

**1.** Joint en feuille, compressible pour fournir un joint d'étanchéité durant l'utilisation, comprenant une feuille composite, **caractérisé en ce que**:

les pores d'une feuille de PTFE poreux expansé sont remplis de gel de silice, dans lesquels ladite feuille de PTFE poreux expansé a une épaisseur non inférieure à 0,5 mm; et
un rapport des pores restants n'est pas inférieur à 5 % et non supérieur à 50 %.

**2.** Joint en feuille selon la revendication 1, dans lequel un rapport du gel de silice dans la feuille composite n'est pas inférieur à 20 % en masse.

**3.** Joint en feuille selon la revendication 1 ou 2, dans lequel les pores restants dans la feuille composite sont des pores indépendants.

**4.** Joint en feuille selon l'une quelconque des revendications 1 à 3, dans lequel ladite feuille de PTFE poreux expansé a une épaisseur non inférieure à 1 mm et non supérieure à 3 mm.

**5.** Joint en feuille selon l'une quelconque des revendications 1 à 3, dans lequel ladite feuille de PTFE poreux expansé a une épaisseur non supérieure à 10 mm.

**6.** Joint en feuille selon l'une quelconque des revendications 1 à 5, dans lequel ledit rapport des pores restants n'est pas inférieur à 10 % et non supérieur à 40 %.

**7.** Joint en feuille selon l'une quelconque des revendications 1 à 6, dans lequel ledit rapport du gel de silice dans la feuille composite n'est pas supérieur à 70 % en masse.

**8.** Procédé de production du joint en feuille selon l'une quelconque des revendications 1 à 7, **caractérisé en ce qu'**il comprend les étapes de:

imprégnation d'une feuille de PTFE poreux expansé avec un sol de silice, dans lequel la feuille de PTFE poreux expansé a une porosité non inférieure à 60 %; et ensuite
frittage de la feuille de PTFE poreux expansé imprégnée.

**9.** Procédé de production selon la revendication 8, comprenant en outre:

l'imprégnation d'une pluralité de feuilles de PTFE poreux expansé avec un sol de silice, chacune des feuilles de PTFE ayant une porosité non inférieure à 60 %; et
la stratification de la pluralité de feuilles de PTFE poreux expansé imprégnées avant l'étape de frittage, dans laquelle la pluralité stratifiée des feuilles imprégnées de PTFE poreux expansé sont conjointement frittées dans l'étape de frittage.

[Fig. 1]

[Fig. 2]

[Fig. 3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1225652 A
- JP 4214787 A
- JP 5078645 A
- JP 2004323717 A
- JP 2007253519 A
- JP 2007296756 A
- JP 2008007607 A
- JP 2008013654 A
- JP 2008013715 A
- JP 2001278997 A
- JP 2007196184 A
- JP 2001329105 A